# EUROPÄISCHE PATENTSCHRIFT

(11) **EP 2 507 296 B1**
(45) Veröffentlichungstag und Bekanntmachung des Hinweises auf die Patenterteilung: **23.10.2013**
(21) Anmeldenummer: 10787124.6
(22) Anmeldetag: 06.12.2010
(51) Int. Cl.: C08G 77/60

(54) **KINETISCH STABILE CHLORIERTE POLYSILANE UND DEREN HERSTELLUNG UND VERWENDUNG**
KINETICALLY STABLE CHLORINATED POLYSILANES AND PRODUCTION AND USE THEREOF
POLYSILANES CHLORÉS CINÉTIQUEMENT STABLES ET LEUR PRODUCTION ET UTILISATION

(30) Priorität: 04.12.2009 DE 102009056731
(43) Veröffentlichungstag der Anmeldung: 10.10.2012
(73) Patentinhaber: Spawnt Private S.à.r.l., 1148 Luxembourg (LU)
(72) Erfinder: AUNER, Norbert, 61479 Glashütten (DE); BAUCH, Christian, 06774 Muldenstein (DE); HOLL, Sven, 65558 Gückigen (DE); DELTSCHEW, Rumen, 04319 Leipzig (DE); MOHSSENI, Javad, 06766 Bitterfeld-Wolfen (DE); LIPPOLD, Gerd, 04179 Leipzig (DE); GEBEL, Thoralf, 01465 Dresden (DE)
(74) Vertreter: Epping - Hermann - Fischer
(86) Internationale Anmeldenummer: PCT/EP2010/068991
(87) Internationale Veröffentlichungsnummer: WO 2011/067415

(56) Entgegenhaltungen:
- WO-A1-2009/143824
- WO-A2-2009/143823

## Beschreibung

Die Erfindung betrifft gemäß einer Ausführungsform kinetisch stabile halogenierte Polysilane mit einem Atomverhältnis von Halogen zu Silizium von wenigstens 1:1 das sich aufgrund seiner besonderen kinetischen Stabilität für eine Vielzahl von Anwendungen eignet.

Aus dem Stand der Technik, beispielsweise M. Schmeisser und P. Voss, Zeitschrift für Anorganische und Allgemeine Chemie, Band 334, 1994, Seiten 50 bis 56, ist bekannt, polymeres Siliciumdichlorid [SiCl₂]ₓ mittels eines mit Stickstoff im Volumenverhältnis 1:1 verdünnten Chlorstroms bei einer Temperatur von 60 °C zumindest teilweise abzubauen. Neben nichtumgesetzten polymeren Siliciumdichlorid könnten vor allen Dingen die Subchloride Si₂Cl₆ bis Si₅Cl₁₂ isoliert werden. Es wurde jedoch nur ein Teil des polymeren Siliciumdichlorids umgesetzt. Dabei werden aus 46,5 g polymeren Siliciumdichlorid als Ausgangssubstanz lediglich 20 g der Subchloride erhalten, was dafür spricht dass weniger als 50 % des Ausgangsmaterials umgesetzt wurden.

Es ist eine Aufgabe einer Ausführungsform der Erfindung, kinetisch stabile halogenierte Polysilan-Gemische zur Verfügung zu stellen, die beispielsweise gegenüber einem Abbau in oxidierenden Atmosphären eine erhöhte Stabilität aufweisen.

Diese Aufgabe wird durch kinetisch stabile halogenierte Polysilan-Gemische gemäß den unabhängigen Ansprüchen 1 und 21 gelöst. Gegenstand weiterer Patentansprüche sind Verfahren zur Herstellung der kinetisch stabilen halogenierten Polysilan-Gemische sowie deren Verwendung.

Gegenstand einer Ausführungsform der Erfindung sind kinetisch stabile halogenierte Polysilane als Gemisch von Verbindungen mit jeweils zumindest vier miteinander verbundenen Siliciumatomen, deren Substituenten Chlor und Chlor und Wasserstoff umfassen und in deren Zusammensetzung das Atomverhältnis Substituent zu Silicium mindestens 1:1 beträgt wobei
a) diese eine kinetisch hohe Stabilität gegenüber oxidativer Spaltung durch Chlor aufweisen, wobei bei Temperaturen von 120 °C innerhalb von 10 Stunden unter Chlorgasüberschuss bei 1013 hPa keine Umsetzung zu mehr als 30 mol%, bevorzugt zu mehr als 20 Mol% erfolgt, und
b) diese einen Anteil von Verzweigungsstellen in den Polysilanmolekülen von mehr als 8 Mol% insbesondere mehr als 11 mol% aufweisen.

Die Erfinder haben festgestellt, dass eine erhöhte kinetische Stabilität bei halogenierten Polysilanen unter anderem durch einen hohen Anteil von Verzweigungsstellen von mehr als 8 Mol% in den Polysilanmolekülen bedingt wird. Der Anteil der Verzweigungsstellen in den erfindungsgemäßen Polysilanmolekülen kann dabei über Integration der scharfen signifikanten ²⁹Si-NMR-Signale von tertiären und quartären Si-Atomen bestimmt werden, die Verzweigungen von der Hauptkette eines Polysilanmoleküls darstellen. Tertiäre Siliciumatome mit der Formel Si-SiX(Si)-Si, sowie quartäre Siliciumatome der Formel Si-(Si)Si(Si)-Si mit X = Chlor oder Wasserstoff lassen sich in ²⁹Si-NMR-Spektren durch die signifikanten Produktsignale bei Verschiebungsbereichen von -20 ppm bis -33 ppm (tertiäre Siliciumatome) und bei -73 ppm bis -93 ppm (quartäre Siliciumatome) nachweisen.

Die²⁹Si-NMR-Spektren wurden dabei an einem 250 MHz Gerät vom Typ Bruker Avance 400 mit der Pulssequenz zg30 aufgenommen und gegen Tetramethylsilan (TMS) als externen Standard [δ(²⁹Si)=0,0] referenziert. Die Akquisitionsparameter sind hierbei: TD= 65536, D1 = 20 s, NS = 350, O1P = -50, und SW = 300.

Ein Chlorgasüberschuss liegt dann vor, wenn in der Reaktionsmischung zur Bestimmung der kinetischen Stabilität der halogenierten Polysilane beständig freies Chlorgas vorhanden ist, in dem Sinne dass die Lösung mit Chlorgas gesättigt ist. Dies kann erreicht werden, indem der Lösung beständig mehr Chlorgas zugeführt wird, als simultan durch die Reaktion verbraucht wird.

Scharfe, signifikante Produktsignale in ²⁹Si-NMR-Spektren liegen dann vor, wenn mit jeweils zumindest vier miteinander verbundenen Siliciumatomen einerseits das Integral des Produktsignals größer als 1 % des Gesamtintegrals aller Produktsignale im ²⁹Si-NMR-Spektrum ist (signifikante Produktsignale) und gleichzeitig die Halbwertsbreite der Produktsignale kleiner als 10 Hz ist (scharfe Produktsignale).

Aufgrund ihrer hohen kinetischen Stabilität können die kinetisch stabilen halogenierten Polysilane für Anwendungen eingesetzt werden, die aufgrund von Nebenreaktionen für die Stoffklasse der halogenierten Polysilane bislang nicht zugänglich waren. So ist beispielsweise das Aufbringen von Schichten von halogenierten Polysilanen auf Substrate in stark oxidierenden Atmosphären, wie beispielsweise Chlorgas mittels der erfindungsgemäßen kinetisch stabilen Polysilane möglich. Weiterhin können die erhaltenen kinetisch stabilen halogenierten Polysilane durch Derivatisierung in andere Polysilanderivate überführt werden, die dann wiederum aufgrund ihrer besonderen Stabilität weniger Nebenreaktionen zum Beispiel Kettenspaltungen eingehen. Manche der erhaltenen chlorierten Polysilanfraktionen weisen einen hohen Anteil zyklischer Verbindungen auf und eignen sich daher für Ringöffnungspolymerisationen.

Gegenstand dieser Ausführungsform der Erfindung ist dabei eine besonders interessante Fraktion der kinetisch stabilen halogenierten Polysilane mit einer Kettenlänge von mehr als 3 Si-Atomen. Diese Fraktion kann durch fraktionierende Destillation aus einem erhaltenen Rohgemisch der kinetisch stabilen halogenierten Polysilane isoliert werden. Si₂Cl₆ kann zum Beispiel durch fraktionierende Destillation bei 70 mbar und Temperaturen von maximal 130°C und Si₃Cl₈ durch Destillation bei 20 mbar und Temperaturen kleiner als 140°C von der Fraktion mit halogenierten Polysilanen mit mehr als 3 Siliciumatomen abgetrennt werden.

Im Gegensatz zu beispielsweise Si₂Cl₆ sind die langkettigen Anteile der kinetisch stabilen halogenierten Polysilane mit mehr als drei Siliciumatomen in der Regel nicht kommerziell verfügbar. Im Rohgemisch der kinetisch stabilen halogenierten Polysilane können je nach Ausgangsmaterial 10 bis 20 Gew.-% der besonders interessanten Fraktion mit mehr als drei Siliciumatomen, sowie etwa 80 bis 90 Gew.-% der kurzkettigen Fraktion mit Si₂Cl₆ und Si₃Cl₈ vorhanden sein.

Gemäß einer weiteren Ausführungsform der Erfindung weisen die kinetisch stabilen halogenierten Polysilane einen Anteil von weniger als 10 mol% an direkten Bindungen zwischen zwei sekundären Siliciumatomen mit der Formel -SiX₂-SiX₂- mit X = Chlor oder Wasserstoff auf.

Die Erfinder haben festgestellt, dass Bindungen zwischen zwei sekundären Si-Atomen besonders einfach mittels einer oxidierenden Atmosphäre, beispielsweise Chlorgas durch Insertion von Chlor gespalten werden können, was in einer verminderten kinetischen Stabilität resultiert. Die kinetisch stabilen halogenierten Polysilane gemäß einer Ausführungsform der Erfindung weisen einen Anteil von weniger als 10 mol%, bezogen auf die an der Bindung beteiligten Siliciumatome (Produktsignale im ²⁹Si-NMR), an direkten Bindungen zwischen zwei sekundären Siliciumatomen auf. Derartige sekundäre Si-Atome zeigen bei längerkettigem halogenierten Polysilanen (n > 3) Produktsignale bei chemischen Verschiebungen kleiner 0 ppm und - 10 ppm auf.

Gemäß einer weiteren Ausführungsform der vorliegenden Erfindung weisen die erfindungsgemäßen kinetisch stabilen halogenierten Polysilane weniger als 5 mol% weiter bevorzugt unter 2 mol% an direkten Bindungen zwischen zwei sekundären Si-Atomen auf.

Die kinetisch stabilen halogenierten Polysilane können nach wie vor Bindungen zwischen einem sekundären Siliciumatom-SiX₂- und beispielsweise einem tertiären Si-Atom -Si(Si)SiX-Si oder einem quartären Si-Atom Si-(Si)Si(Si)-Si aufweisen. Möglich sind auch Bindungen zwischen einem sekundären und einem primären Si-Atom.

Weiter bevorzugt weisen die kinetisch stabilen halogenierten Polysilane eine so große kinetische Stabilität gegenüber oxidativer Spaltung durch Chlor bei Temperaturen von 120 °C innerhalb von 10 Stunden unter Chlorgasüberschuss bei 1013 hPa auf, dass keine Umsetzung zu mehr als 20 mol%, bevorzugt 15 Mol% und weiter bevorzugt bis zu 10 mol% erfolgt.

Ein Verfahren zur Bestimmung der kinetischen Stabilität der halogenierten Polysilanmischungen wird dabei folgendermaßen durchgeführt:

Der mittels des Testverfahrens, der oxidativen Spaltung durch Chlor erzielte Umsatz an den kinetisch stabilen halogenierten Polysilanen kann folgendermaßen berechnet werden. In einem ersten Schritt wird die empirische Formel des Materials bestimmt, das einer chlorierenden Teilabbau durch Chlor ausgesetzt werden wird. Dazu wird eine Chloridbestimmung, zum Beispiel die Chloridbestimmung nach Mohr durchgeführt und anschließend über die Integration der Peaks in einem ¹H-NMR-Spektrum der Anteil der Wasserstoffatome ermittelt. Das in der Ausgangssubstanz vorhandene Silicium kann dann durch Differenzwägung ermittelt werden, so dass eine empirische Formel des eingesetzten Materials, zum Beispiel SiCl_{2,5} erhalten wird. Nach der durchgeführten oxidativen Spaltung durch Chlor kann von dem dann erhaltenen Gemisch in analoger Weise die empirische Formel ermittelt werden, zum Beispiel SiCl_{2,8}, wobei durch Chlorierung der Chloridgehalt des Produkts gegenüber dem Chloridgehalt des Edukts erhöht ist. Wenn man davon ausgeht, dass das formale thermodynamische Endprodukt einer vollständigen Chlorierung SiCl₄ ist, können beide Formeln der Ausgangsverbindung und des erhaltenen Produkts durch Addition der Ausgangsverbindung und SiCl₄ als dem thermodynamischen Endprodukt der Reaktion folgendermaßen dargestellt werden: SiCl_{2,8} = a x SiCl_{2,5} + b x SiCl₄, wobei a und b addiert 1 ergeben. Mathematisch ergibt sich hieraus die Gleichung 2,8 = 2,5a + 4b, wobei b = 1 - a ist. Aufgrund dieser Überlegung ergibt sich dann die Formel 2,8 = 2,5a + 4(1-a), woraus sich für a letztendlich in diesem Fall ein Wert von 0,8 ergibt, was bedeutet, dass formal lediglich 20 Mol% des Ausgangsproduktes SiCl_{2,5} bis zum SiCl₄ umgesetzt wurden. Das bedeutet, dass im Sinne der Erfindung bei einer Umsetzung von lediglich 20 Mol% ein kinetisch stabiles halogeniertes Polysilan als Mischung vorliegt.

Die Mischung der erfindungsgemäßen kinetisch stabilen halogenierten Polysilane weist auch gegenüber den jeweiligen Einzelkomponenten eine erhöhte Löslichkeit in verschiedenen inerten Lösungsmitteln, wie beispielsweise Cyclohexan, Benzol, Toluol oder Siliciumtetrachlorid auf, was darauf zurückzuführen ist, dass die verschiedenen Komponenten des kinetisch stabilen halogenierten Polysilangemisches gegenseitig als Lösungsvermittler wirken. Dies hat zur Folge, dass erfindungsgemäße halogenierte Polysilangemische mit erhöhter kinetischer Stabilität besser im Vergleich zu den Einzelkomponenten handhabbar sind.

Insbesondere können die erfindungsgemäßen kinetisch stabilen halogenierten Polysilangemische in inerten Lösungsmitteln überwiegend löslich sein, wobei als inerte Lösungsmittel aprotische nicht nukleophile Lösungsmittel dienen, wie zum Beispiel Aromaten und Alkane. Unter "überwiegend löslich" wird hier eine Löslichkeit zu mehr als 50 Massen% verstanden.

Gemäß einer weiteren Ausführungsform der vorliegenden Erfindung weist das Polysilangemisch einen Anteil von Neopentachlorsilan Neo-Si₅Cl₁₂ von mindestens 10 mol%, insbesondere mehr als 18 mol%, besonders bevorzugt mehr als 25 mol% auf. Neopentachlorsilan ist eine verzweigtkettige Verbindung mit einer besonders hohen kinetischen Stabilität.

Weiterhin können die erfindungsgemäßen halogenierten Polysilangemische mit hoher kinetischer Stabilität eine empirische Formel SiClₓ mit x = 2,2 bis 2,5, insbesondere = 2,25 bis 2,4 aufweisen.

Die durchschnittliche Kettenlänge der kinetisch stabilen halogenierten Polysilane mit mehr als drei Siliciumatomen im Grundgerüst ist von n = 4 bis 10, bevorzugt n = 4 bis 8. Durch Kombination der empirischen Formel mit der durchschnittlichen Kettenlänge ergibt sich somit eine empirische Formel (SiClₓ)ₙ mit n = 4 bis 10 und x = 2,2 bis 2,5 mit den weiter oben genannten bevorzugten Parameterbereichen sowohl für n als auch für x.

Gemäß einer weiteren Ausführungsform der Erfindung weisen die Polysilangemische kinetisch stabiler halogenierter Polysilane in ²⁹Si-NMR-Spektren scharfe signifikante Produktsignale im chemischen Verschiebungsbereich von 15 ppm bis -10 ppm (primäre und sekundäre Siliciumatome) und im chemischen Verschiebungsbereich von -28 ppm bis -35 ppm (tertiäre Siliciumatome) und im chemischen Verschiebungsbereich von -70 ppm bis -85 ppm (quartäre Siliciumatome) auf. Im Bezug auf die tertiären und quartären Siliciumatome kommen als bevorzugte Verschiebungsbereiche insbesondere -31 ppm bis -33 ppm und -77 bis -82 ppm in Betracht. Signale in diesen Verschiebungsbereichen sind charakteristisch für kinetisch stabile halogenierte Polysilane.

Vor allem im chemischen Verschiebungsbereich für primäre und sekundäre Siliciumatome weisen gemäß einer weiteren Ausführungsform der Erfindung die kinetisch stabilen halogenierten Polysilangemische signifikante und scharfe Produktsignale in einem chemischen Verschiebungsbereich von 8,5 bis 3 ppm, 1 ppm bis -1 ppm, -3 ppm bis -5 ppm und -6 ppm bis -8,63 ppm oder in Kombinationen davon, auf.

Insbesondere können kinetisch stabile halogenierte Polysilangemische in den folgenden chemischen Verschiebungsbereichen jeweils mindestens die folgende Anzahl signifikanter scharfer Produktsignale aufweisen, nämlich vier Signale in einem chemischen Verschiebungsbereich von 7 bis 3 ppm, ein Produktsignal im chemischen Verschiebungsbereich von 1 bis -1 ppm, ein Signal von -29,5 bis -33 ppm und zwei Signale im chemischen Verschiebungsbereich von -78 bis -82 ppm.

Derartige Produktsignale sind charakteristisch für eine Mischung verschiedener primärer und sekundärer aber auch tertiärer und quartärer Siliciumatome in den erfindungsgemäßen halogenierten Polysilanen mit hoher kinetischer Stabilität gemäß bestimmter Ausführungsformen der Erfindung.

Weiterhin ist es möglich, dass die kinetisch stabilen Polysilangemische neben Chlorsubstituenten zusätzlich Wasserstoffsubstituenten enthalten, wobei der Wasserstoffgehalt weiterhin kleiner als 2 Atom-% insbesondere kleiner als 1 Atom-% sein kann. Der Anteil der Wasserstoffatome an den kinetisch stabilen halogenierten, insbesondere chlorierten Polysilanen kann beispielsweise mittels Integration der Produktsignale und Vergleich der erhaltenen Integrale mit denen eines internen Standards in ¹H-NMR-Spektren bestimmt werden.

Halogenierte Polysilane die neben Chlorsubstituenten noch Wasserstoffsubstituenten aufweisen haben charakteristische Produktsignale in 1H-NMR-Spektren in chemischen Verschiebungsbereichen zwischen 6,5 und 3,5 ppm, insbesondere zwischen 5,9 und 3,8 ppm.

Gemäß einer weiteren Ausführungsform der Erfindung könnten die Substituenten der kinetisch stabilen halogenierten Polysilane ausschließlich aus Halogenen, insbesondere Chlor bestehen. Unter "bestehen" ist dabei zu verstehen, dass weniger als 0,5 Mol%, weiter bevorzugt weniger als 0,05 Mol% andere Substituenten, wie Wasserstoff vorhanden sind. Die halogenierten kinetisch stabilen Polysilan-Gemische können als Feinchemikalien mit einem sehr hohen Reinheitsgrad von wenigstens 99,5% erhalten werden. Die Verunreinigungen können weniger als 10 ppm betragen.

Zur weiteren Charakterisierung der kinetisch stabilen halogenierten Polysilane können auch Raman-Spektren aufgenommen werden, wobei diese mit einem Spektrometer XY 800 der Firma Dilor mit abstimmbarer Laseranregung (T-Saphirlaser, durch Argon-Ionenlaser gepumpt) sowie konvokalem Raman- und Lumineszenzmikroskop, mit flüssigem Stickstoff gekühltem CCD Detektor, Messtemperatur gleich Raumtemperatur, Anregungswellenlängen im sichtbaren Spektralbereich unter anderem 514,53 nm und 750 nm ermittelt wurden.

Im Raman-Spektrum zeigen kinetisch stabile halogenierte Polysilane nach einer Ausführungsform der Erfindung signifikante Produktsignale bei unter 650 Wellenzahlen, insbesondere zwischen 270 und 350 und zwischen 520 und 600 Wellenzahlen (cm⁻¹). Als signifikante Produktsignale in Raman-Spektren werden dabei Produktsignale definiert die mehr als 10 % der Intensität des höchsten Peaks im Raman-Spektrum aufweisen. Die Erfinder haben dabei festgestellt, dass Raman-Spektren mit derartigen signifikanten Produktsignalen in erster Linie auf offenkettige verzweigte Verbindungen zurückzuführen sind, die praktisch keine zyklischen Verbindungen aufweisen.

Insbesondere können kinetisch stabile halogenierte Polysilane mindestens drei signifikante Produktsignale bei 270 bis 340 Wellenzahlen und mindestens zwei signifikante Produktsignale bei 540 bis 640 Wellenzahlen aufweisen.

Das Polysilangemisch kann dabei farblos bis schwach gelb oder elfenbeinweiß gefärbt sein. In dem Fall, dass die kinetisch stabilen halogenierten Polysilane dünnflüssig und/oder kristallin sind, beträgt die Viskosität des flüssigen Anteils bei Raumtemperatur weniger als 1000 mPa s, bevorzugt weniger als 400 mPa s. Weiterhin kann die lösliche Fraktion unter vermindertem Druck bevorzugt 1 bis 100 Pa zu mehr als 80 % unzersetzt flüchtig und/oder destillierbar sein.

Gegenstand einer weiteren Ausführungsform der Erfindung sind auch kinetisch stabile halogenierte Polysilane als Gemisch von Verbindungen mit mehr als drei Siliciumatomen im Grundgerüst mit jeweils zumindest vier miteinander verbundenen Siliciumatomen, deren Substituenten Chlor oder Chlor und Wasserstoff umfassen und in deren Zusammensetzung das Atomverhältnis Substituent:Silicium mindestens 1:1 beträgt, wobei
a) diese eine kinetisch hohe Stabilität gegenüber oxidativer Spaltung durch Chlor aufweisen, wobei bei Temperaturen von 120 °C innerhalb von 10 Stunden und bei Chlorgasüberschuss bei 1013 hPa keine Umsetzung der Polysilane zu mehr als 30 Mol% erfolgt,
b) diese durch einen Teilabbau von halogenierten Polysilanen erhältlich sind, die entweder
   1. thermisch hergestellte chlorierte Polysilane, oder
   2. plasmachemisch hergestellte chlorierte Polysilane umfassen,
   und der Teilabbau eine Chlorierung beinhaltet die über einen Zeitraum von 4 bis 29 Stunden bei einem Druck von 200 bis 2000 hPa durchgeführt wird.

Derartige halogenierte Polysilane weisen die bereits weiter oben genannten vorteilhaften Eigenschaften in Bezug auf eine hohe kinetische Stabilität auf.

Als Ausgangsverbindungen für einem Teilabbau durch Chlorierung unter Bildung der kinetisch stabilen halogenierten Polysilane, können beispielsweise thermisch hergestellte chlorierte Polysilane, wie sie in der PCT-Anmeldung WO 2009/143824 A1 beschrieben werden, verwendet werden.

Als thermisch hergestellte Polysilane können Polysilane verwendet werden die jeweils mindestens eine direkte Bindung Si-Si aufweisen, und deren Substituenten aus Halogen, insbesondere Chlor bestehen und in deren Zusammensetzung das Atomverhältnis Substituent:Silicium mindestens 1:1 beträgt,
- wobei die Polysilane aus Ringen und Ketten mit einem hohen Anteil Verzweigungsstellen bestehen, der bezogen auf das gesamte Produktgemisch größer 1 Mol% beträgt, und
- die ein Raman-Molekülschwingungsspektrum aufweisen das ein Intensitätsverhältnis I₁₀₀ : I₁₃₂ < 1 aufweist, wobei I₁₀₀ die Raman-Intensität bei 100 cm⁻¹ und I₁₃₂ die Raman-Intensität bei 132 cm⁻¹ bedeuten und
- in ²⁹Si-NMR-Spektren die signifikanten Produktsignale im chemischen Verschiebungsbereich von +23 ppm bis -13 ppm, von -18 ppm bis -33 ppm und von -73 ppm bis -93 ppm vorhanden sind.

Alternativ oder zusätzlich können auch plasmachemisch hergestellte Polysilane verwendet werden, wie sie beispielsweise in der PCT-Anmeldung WO 2009/143823 A2 beschrieben werden.

Diese plasmachemisch hergestellten Polysilane weisen ebenfalls mindestens eine direkte Bindung Si-Si auf, wobei deren Substituenten aus Halogen oder Halogen und Wasserstoff bestehen und in deren Zusammensetzung das Atomverhältnis Substituent:Silicium mindestens 1:1 beträgt, wobei
a) das Halogen Chlor ist
b) der Wasserstoffgehalt des Polysilans kleiner als 2 Atom-% ist
c) das Polysilan nahezu keine kurzkettigen verzweigten Ketten und Ringe enthält, wobei der Gehalt an Verzweigungsstellen des kurzkettigen Anteils, insbesondere des aufsummierten Anteils der perhalogenierten Derivate von Neohexasilan, Neopentasilan, Isotetrasilan, Isopentasilan, Perchlor,2,3-disilyl-tetrasilan und Isohexasilan bezogen auf das gesamte Produktgemisch kleiner als 1 mol% beträgt,
d) das Raman-Molekülschwingungsspektrum eine Intensität von I₁₀₀:I₁₃₂ von größer 1 aufweist, wobei I₁₀₀ die Raman-Intensität bei 100 cm⁻¹ und I₁₃₂ die Raman-Intensität bei 132 cm⁻¹ bedeuten
e) es in ²⁹Si-NMR-Spektren seine signifikanten Produktsignale im chemischen Verschiebungsbereich von +15 bis - 7 ppm aufweist.

Bevorzugt werden kinetisch stabile halogenierte Polysilan-Gemische mit Kettenlängen von n = 2 bis 10 bei einem Teilabbau von plasmachemisch hergestellten halogenierten Polysilanen erhalten, während bei einem Teilabbau der thermisch hergestellten halogenierten Polysilane die Kettenlängen der kinetisch stabilen halogenierten Polysilan-Gemische bei n = 2 bis 8 liegen.

Der Teilabbau der halogenierten Polysilane zu dem kinetisch stabilen halogenierten Polysilanen kann dabei bevorzugt bei Temperaturen zwischen 60 °C und 140 °C durchgeführt werden.

Durch Teilabbau mittels einer Chlorierung über einen Zeitraum von 4h bis 29h bei einem Druck von 200 bis 2000 hPa kann sichergestellt werden, dass die erfindungsgemäßen kinetisch stabilen halogenierten Polysilane gebildet werden. Insbesondere kann einerseits verhindert werden, dass durch zu harte Chlorierungsbedingungen das gesamte eingesetzte halogenierte Polysilangemisch zu dem möglichen Endprodukten SiCl₄ oder Si₂Cl₆ aufgespalten wird, andererseits wird aber auch sichergestellt, dass die durch die Chlorierung gebildeten Polysilan-Gemische eine ausreichende kinetische Stabilität aufweisen. Die Erfinder haben somit erkannt, dass durch Einhaltung dieser speziellen Reaktionsbedingungen bei dem Teilabbau der halogenierten Polysilane kinetisch stabile halogenierte Polysilane gebildet werden, die vollkommen neue Einsatzgebiete gegenüber den herkömmlichen halogenierten Polysilanen erschließen.

Gegenstand der Erfindung ist weiterhin auch ein Verfahren zur Herstellung eines kinetisch stabilen halogenierten PolysilanGemisches, wobei ein Teilabbau halogenierter Polysilane die durch ein thermisches und/oder plasmachemisches Verfahren herstellt wurden durchgeführt wird, wobei dieser Teilabbau
a) eine Chlorierung beinhaltet,
b) die Temperatur der Reaktion bei 60 bis 140 °C bevorzugt bei 90 bis 130 °C gehalten wird und
c) bei einem Druck von 200 bis 2000 hPa, bevorzugt bei 800 bis 1500 hPa gearbeitet wird.

Gemäß einer weiteren Ausführungsform eines erfindungsgemäßen Verfahrens kann nach dem Teilabbau das gebildete Rohgemisch aus kinetisch stabilen halogenierten Polysilanen noch einer fraktionierenden Destillation zur Abtrennung einer Fraktion der gebildeten kinetisch stabilen halogenierten Polysilane mit Kettenlängen n = 2 und 3, also Hexachlordisilan und Oktachlortrisilan, unterworfen werden. Diese fraktionierende Destillation kann beispielsweise bei einem Druck von 70 mbar und einer Badtemperatur von 130 °C zur Abtrennung von Si₂Cl₆ und bei einem Druck von 20 mbar und einer Badtemperatur von über 140 °C zur Abtrennung von Si₃Cl₈ durchgeführt werden.

Weiterhin können die halogenierten Polysilane vor dem Teilabbau verdünnt werden, wobei bevorzugt SiCl₄, Si₂Cl₆ und/oder Si₃Cl₈ als Verdünnungsmittel verwendet werden. Die Verdünnung führt dabei zu einer Verringerung der Viskosität, was zu einer effektiveren Chlorierung während des Teilabbaus führt.

Die erfindungsgemäßen kinetisch stabilen halogenierten Polysilangemische sowohl mit mehr als drei Siliciumatomen mit dem Grundgerüst als auch mit der zusätzlichen Fraktion mit Hexachlordisilan und Oktachlortrisilan sind in inerten Lösungsmitteln überwiegend, also zu mehr als 50 Massenprozent löslich, wobei als inerte Lösungsmittel bevorzugt aprotische nicht nukleophile Lösungsmittel wie Aromaten und Alkane, beispielsweise Toluol, Benzol, Cyclohexan und SiCl₄ verwendet werden können.

Im Folgenden sollen einige Ausführungsformen der Erfindung anhand von Ausführungsbeispielen und Figuren noch näher erläutert werden:

Die Figuren 1A und 1B zeigen ein ²⁹Si-NMR-Spektrum eines erfindungsgemäßen Gemisches von kinetisch stabilen halogenierten Polysilanen, die durch Teilabbau mittels Chlorierung aus halogenierten Polysilanen erhalten wurden.

Figur 2 zeigt ein Raman-Spektrum des gleichen PolysilanGemisches wie in den Figuren 1A und 1B.

### Ausführungsbeispiel 1:

33,02 g plasmachemisch hergestelltes Perchlorpolysilan werden durch Kältedestillation von Verdünnungsmitteln befreit und auf 120°C erwärmt. Das viskose Material wird durch die Temperaturerhöhung rührfähig. Unter Rühren wird ein Chlorgasstrom über die Flüssigkeit geleitet. Ausgetragenes Material wird in einer Kühlfalle bei 0°C auskondensiert. Die Viskosität der Flüssigkeit nimmt während der Reaktion ab. Nach 9,5 h werden die gesammelten Reaktionsprodukte fraktioniert destilliert. Die ²⁹Si-NMR-spektroskopische Analyse zeigt wenig SiCl₄ und Si₂Cl₆ sowie Si₃Cl₈ als Hauptprodukte. In den höher siedenden Fraktionen lassen sich die perchlorierten Derivate des n-Tetrasilans, des iso-Tetrasilans, des neo-Pentasilans sowie des neo-Hexasilans identifizieren. N-Perchlorsilane mit einer Kettenlänge > 4 lassen sich nicht nachweisen.

### Ausführungsbeispiel 2:

31,5 g plasmachemisch hergestellte halogenierte Polysilane werden durch Kältedestillation weitgehend von Verdünnungsmitteln befreit und auf 100°C erwärmt. Das Material wird beim Erwärmen rührfähig. Unter Rühren wird Cl₂-Gas gegen ein Puffervolumen hinter der Apparatur portionsweise zugegeben. Ausgetragenes Material kondensiert in einer auf 0°C gekühlten Kühlfalle. Die orange, viskose Flüssigkeit wird während der Reaktion gelb und die Viskosität nimmt ab. Die Reaktionszeit beträgt 15 h. Die Inhalte der Kühlfalle und des Reaktionskolbens werden vereinigt und fraktioniert destilliert. In den ²⁹Si-NMR-Spektren der Fraktionen lassen sich die gleichen Verbindungen wie in Ausführungsbeispiel 1 identifizieren. Die Menge an n-Perchlortetrasilan ist reduziert im Vergleich zu Ausführungsbeispiel 1.

### Ausführungsbeispiel 3:

44,93 g thermisch durch Reaktion von SiCl₄ mit elementarem Si hergestellte halogenierte Polysilane werden durch Kältedestillation weitgehend von SiCl₄ befreit und auf 100°C erwärmt. Das Material wird beim Erwärmen rührfähig. Unter Rühren wird Cl₂-Gas gegen ein Puffervolumen hinter der Apparatur portionsweise durch ein Gaseinleitrohr in die Reaktionsmischung eingeleitet. Ausgetragenes Material kondensiert in einer auf 0°C gekühlten angeschlossenen Kühlfalle. Die orange, viskose Flüssigkeit wird während der Reaktion gelb und die Viskosität nimmt ab. Die Reaktionszeit beträgt 11 h. Die Inhalte der Kühlfalle und des Reaktionskolbens werden vereinigt und fraktioniert destilliert. In den ²⁹Si-NMR-Spektren der Fraktionen lassen sich die gleichen Verbindungen wie in Ausführungsbeispiel 1 identifizieren.

### Ausführungsbeispiel 4:

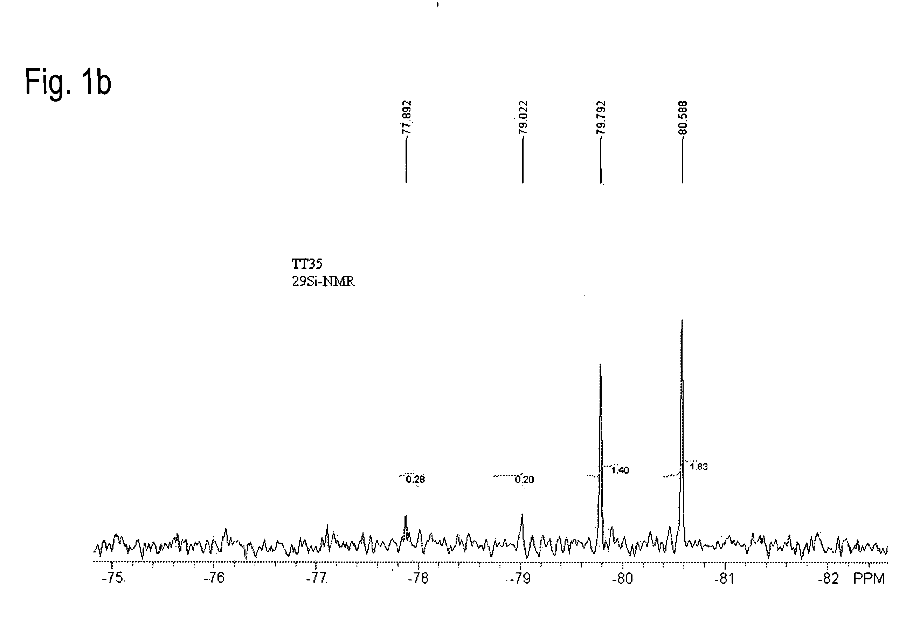

Eine Lösung von 3052,7 g plasmachemisch hergestelltem PCS in SiCl₄ wird mit 1388,7 g Si₂Cl₆ versetzt und SiCl₄ abdestilliert. Die Lösung wird auf 60°C erwärmt. Unter Rühren wird Cl₂-Gas gegen ein Puffervolumen hinter der Apparatur durch ein Gaseinleitrohr mit Glasfritte in die Lösung eingeleitet. Ausgetragenes Material kondensiert in einer auf 0°C gekühlten angeschlossenen Kühlfalle. Die Temperatur der Lösung steigt durch die Reaktionswärme an. Die Temperatur der Reaktionslösung wird durch Einregeln der Heizbadtemperatur und Regulieren der eingeleiteten Chlorgasmenge zwischen 110°C und 120°C gehalten. Der Druck in der Apparatur liegt während der Reaktion zwischen 1013 hPa und 1213 hPa. Innerhalb von 12 h färbt sich die zunächst intensiv orange-rote Lösung gelb. Danach nimmt die Chlorabsorption der Reaktionsmischung deutlich ab. Nach 25,5 h wird die Reaktion beendet und von den Reaktionsprodukten durch Destillation SiCl₄, Si₂Cl₆ und der größte Teil des Si₃Cl₈ abgetrennt. In den ²⁹Si-NMR-Spektren der abgetrennten Fraktionen lassen sich die erwarteten Verbindungen nachweisen. Es werden 760,1 g SiCl₄ mit geringen Mengen Si₂Cl₆, 3354,9 g Si₂Cl₆ und 861,8 g Si₃Cl₈ mit geringen Mengen Si₂Cl₆ erhalten. Der Destillationsrückstand beträgt 401,7 g. Das ²⁹Si-NMR-Spektrum des Destillationsrückstandes ist in Figur la abgebildet, wobei Figur 1b einen vergrößerten Ausschnitt aus diesem ²⁹Si-NMR-Spektrum zeigt. Deutlich zu erkennen sind die scharfen signifikanten Produktsignale bei den chemischen Verschiebungen zwischen + 7 pmm und -8 ppm für die primären und sekundären Si-Atome, die Produktsignale bei etwa -32 ppm für die tertiären Si-Atome und die Produktsignale zwischen -77 ppm und -81 ppm für die tertiären Si-Atome.

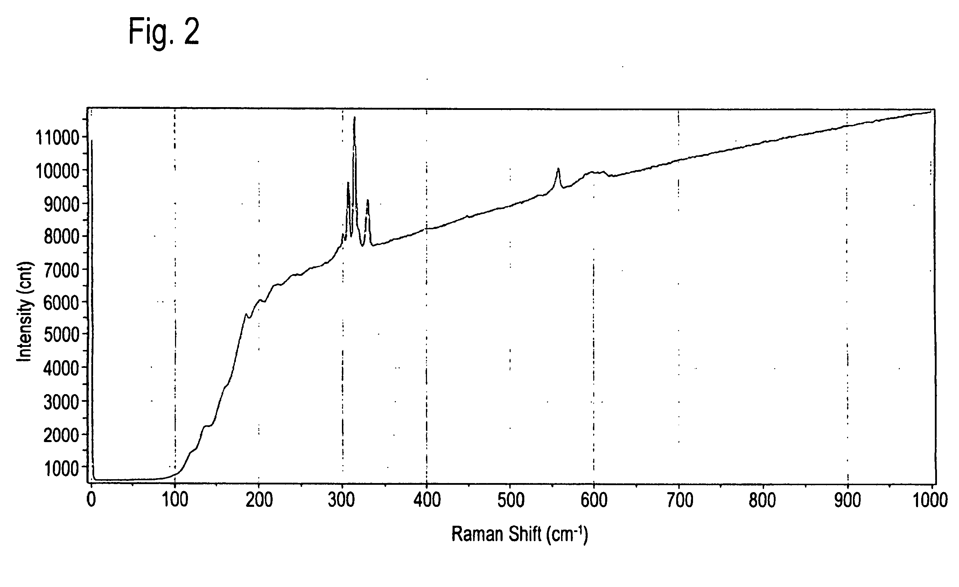

Figur 2 zeigt das Raman-Spektrum des Destillationsrückstandes. Die Produktsignale zwischen etwa 290 bis 350 cm¹ und zwischen 520 bis 640 cm⁻¹ sind gut zu erkennen.

### Ausführungsbeispiel 5:

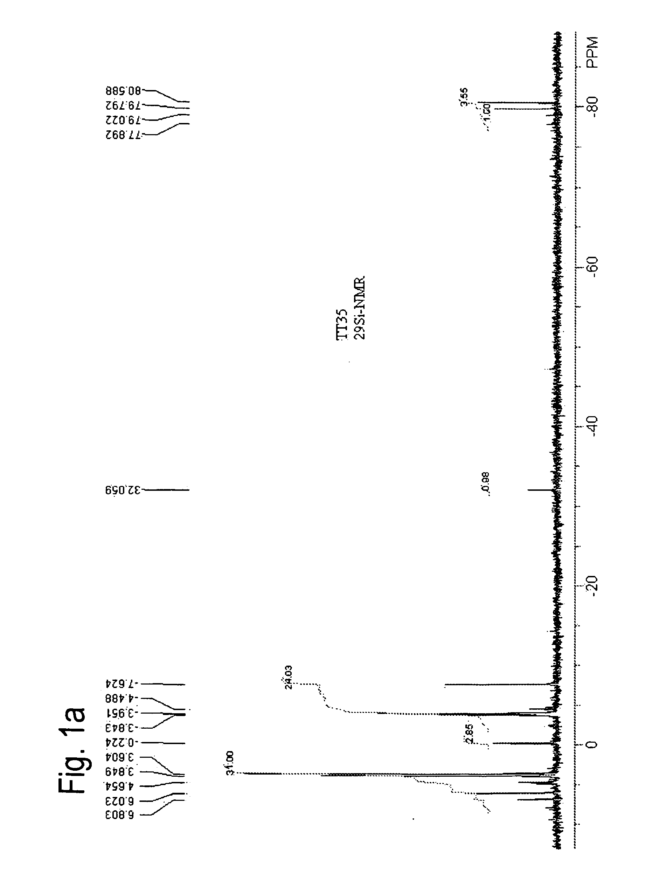

Eine Lösung von 3933,7 g plasmachemisch hergestelltem PCS in SiCl₄ wird mit 765,9 g Si₃Cl₈ versetzt und SiCl₄ abdestilliert. Die Lösung wird auf 60°C erwärmt. Unter Rühren wird Cl₂-Gas gegen ein Puffervolumen hinter der Apparatur durch ein Gaseinleitrohr mit Glasfritte in die Lösung eingeleitet. Ausgetragenes Material kondensiert in einer auf 0°C gekühlten angeschlossenen Kühlfalle. Die Temperatur der Lösung steigt durch die Reaktionswärme an. Die Temperatur der Reaktionslösung wird durch Einregeln der Heizbadtemperatur und Regulieren der eingeleiteten Chlorgasmenge zwischen 110°C und 120°C gehalten. Der Druck in der Apparatur liegt während der Reaktion zwischen 1013 hPa und 1213 hPa. Innerhalb von 17 h färbt sich die zunächst intensiv orange-rote Lösung gelb. Danach nimmt die Chlorabsorption der Reaktionsmischung deutlich ab. Nach 29 h wird die Reaktion beendet und vom Reaktionsprodukt durch Destillation SiCl₄, Si₂Cl₆ und der größte Teil des Si₃Cl₈ abgetrennt. In den ²⁹Si-NMR-Spektren der abgetrennten Fraktionen lassen sich die erwarteten Verbindungen nachweisen. Das Spektrum des Destillationsrückstandes entspricht Figuren 1a und 1b. Die isolierte Menge der Si₃Cl₈-Fraktion ist mit 649,9 g geringer als die Einsatzmenge.

### Ausführungsbeispiel für eine Testchlorierung zur Bestimmung der kinetischen Stabilität:

In einer Apparatur mit 100 g einer durch Chlorierung von plasmachemisch hergestelltem Polychlorsilan für länger als 10 erhaltenen Mischung von kinetisch stabilen Chlorsilanen wird zunächst bei Raumtemperatur durch heftiges Einleiten von Cl₂-Gas Schutzgas verdrängt. Danach wird die Apparatur geschlossen, unter Rühren auf 120°C erwärmt und weiteres Chlorgas gegen ein Puffervolumen hinter der Apparatur portionsweise durch ein Gaseinleitrohr in die Reaktionsmischung eingeleitet. Ausgetragenes Material kondensiert in einer auf 0°C gekühlten angeschlossenen Kühlfalle. Der Druck in der Apparatur wird während der Reaktion zwischen 1013 hPa und 1213 hPa gehalten. Nach 10 h Reaktionszeit zeigt ein Vergleich der ²⁹Si-NMR-Spektren eine Zunahme von SiCl₄ und Si₂Cl₆ in der Lösung, während die Signale für Si₃Cl₈ schwächer geworden sind und keine Reste von n-Si₄Cl₁₀ mehr zu erkennen sind. Eine vergleichende destillative Aufarbeitung von Ausgangsmaterial und Reaktionsprodukt zeigt eine Abnahme der Si₃Cl₈-Fraktion um etwa 20 Gewichts%, während der Destillationsrückstand aus kinetisch stabilen chlorierten Polysilanen mit einer Kettenlänge n ≥ 4 sein Gewicht kaum verändert hat. Die niedrig siedenden Fraktionen, welche aus hauptsächlich SiCl₄ oder Si₂Cl₆ bestehen, weisen hingegen ein erhöhtes Gewicht auf.

## Patentansprüche

1. Kinetisch stabile halogenierte Polysilane als Gemisch von Verbindungen mit mehr als drei Siliciumatomen im Grundgerüst mit jeweils zumindest vier miteinander verbundenen Si-Atomen, deren Substituenten Chlor oder Chlor und Wasserstoff umfassen und in deren Zusammensetzung das Atomverhältnis Substituent:Silicium mindestens 1:1 beträgt, wobei
a) diese eine kinetisch hohe Stabilität gegenüber oxidativer Spaltung durch Chlor aufweisen, wobei bei einer Temperatur von 120°C innerhalb von 10h unter Chlorgasüberschuss bei 1013hPa keine Umsetzung der Polysilane zu mehr als 30 Mol%, bevorzugt zu mehr als 20 Mol% erfolgt, und
b) diese einen Anteil von Verzweigungsstellen in den Polysilanmolekülen von mehr als 8 Mol%, insbesondere mehr als 11 Mol% aufweisen.

2. Polysilan-Gemisch nach Anspruch 1, wobei dieses einen Anteil an neo-Si₅Cl₁₂ von mindestens 10 Mol%, insbesondere mehr als 18 Mol%, besonders bevorzugt mehr als 25 Mol% aufweist.

3. Polysilan-Gemisch nach einem der vorherigen Ansprüche, wobei es eine empirische Formel SiClₓ mit x = 2,2 bis 2,5, insbesondere gleich 2,25 bis 2,4 aufweist.

4. Polysilan-Gemisch nach einem der vorhergehenden Ansprüche, wobei es eine durchschnittliche Kettenlänge von n gleich 4 bis 10, bevorzugt n gleich 4 bis 8 aufweist.

5. Polysilan-Gemisch nach einem der vorangehenden Ansprüche, wobei es in ²⁹Si-NMR-Spektren scharfe signifikante Produktsignale im chemischen Verschiebungsbereich von 15 ppm bis -10 ppm, und im chemischen Verschiebungsbereich von -28 bis -35 ppm, insbesondere bei -31 bis -33 ppm, und im chemischen Verschiebungsbereich von -70 bis -85 ppm insbesondere bei -77 bis -82 ppm aufweist.

6. Polysilan-Gemisch nach dem vorhergehenden Anspruch, wobei die scharfen signifikanten Produktsignale in ²⁹Si-NMR-Spektren in einem chemischen Verschiebungsbereich ausgewählt aus 8,5 bis 3 ppm, 1 ppm bis -1 ppm, -3 bis -5 ppm und -6 ppm bis -8,3 ppm oder Kombinationen davon vorhanden sind.

7. Polysilan-Gemisch nach einem der vorangehenden Ansprüche, wobei es in ²⁹Si-NMR-Spektren in den folgenden chemischen Verschiebungsbereichen jeweils mindestens die folgende Anzahl signifikanter scharfer Produktsignale besitzt: Vier Signale von 7 bis 3 ppm, ein Signal von 1 bis -1 ppm, ein Signal von -29,5 bis -33 ppm, zwei Signale von -78 bis -82 ppm.

8. Polysilan-Gemisch nach einem der vorhergehenden Ansprüche, wobei es neben Chlorsubsubstituenten zusätzlich Wasserstoffsubstituenten enthält.

9. Polysilan-Gemisch nach dem vorhergehenden Anspruch, wobei der Wasserstoff-Gehalt kleiner als 2 Atom-%, insbesondere kleiner als 1 Atom-% ist.

10. Polysilan-Gemisch nach einem der vorangehenden Ansprüche 8 oder 9, wobei es in ¹H-NMR-Spektren Produktsignale im chemischen Verschiebungsbereich zwischen 6,5 und 3,55 ppm, insbesondere zwischen 5,9 und 3,8 ppm aufweist.

11. Polysilan-Gemisch nach einem der vorangehenden Ansprüche, wobei es in Ramanspektren seine signifikanten Produktsignale bei unter 650 Wellenzahlen, insbesondere zwischen 270 und 350 und zwischen 520 und 640 Wellenzahlen besitzt.

12. Polysilan-Gemisch nach einem der vorangehenden Ansprüche, wobei es in Ramanspektren mindestens drei signifikante Produktsignale bei 270 bis 340 Wellenzahlen und mindestens zwei signifikante Produktsignale bei 540 bis 640 Wellenzahlen besitzt.

13. Polysilan-Gemisch nach einem der vorangehenden Ansprüche, wobei es farblos bis schwachgelb oder elfenbeinweiß ist.

14. Polysilan-Gemisch nach einem der vorangehenden Ansprüche, wobei es dünnflüssig und/oder kristallin anfällt und bevorzugt nicht zähviskos ist, wobei die Viskosität des flüssigen Anteils bei RT kleiner als 1000 mPa s ist, bevorzugt kleiner als 400 mPa s.

15. Polysilan-Gemisch nach einem der vorangehenden Ansprüche, wobei es in inerten Lösungsmitteln überwiegend löslich list.

16. Polysilan-Gemisch nach einem der vorangehenden Ansprüche, wobei die lösliche Fraktion unter vermindertem Druck, bevorzugt 1 bis 100 Pa, zu mehr als 80% unzersetzt flüchtig und/oder destillierbar ist.

17. Polysilan-Gemisch nach einem der vorangehenden Ansprüche, wobei die Substituenten aus Chlor bestehen.

18. Polysilan-Gemisch nach einem der vorhergehenden Ansprüche, zusätzlich aufweisend eine Fraktion von halogenierten Polysilanen mit einer Kettenlänge n = 2 bis 3 (Si₂Cl₆ und Si₃Cl₈, leicht durch Destillation von den höherkettigen Polysilanen abtrennbar).

19. Polysilan-Gemisch nach dem vorhergehenden Anspruch, wobei es eine stöchiometrische Formel SiClₓ mit x = 2,2 bis 2,5, insbesondere gleich 2,25 bis 2,4 aufweist.

20. Polysilan-Gemisch nach einem der vorhergehenden Ansprüche, wobei dieses einen Anteil von weniger als 10 Mol% an direkten Bindungen zwischen zwei sekundären Si-Atomen enthält

21. Kinetisch stabile halogenierte Polysilane als Gemisch von Verbindungen mit mehr als drei Siliciumatomen im Grundgerüst mit jeweils zumindest vier miteinander verbundenen Si-Atomen, deren Substituenten Chlor oder Chlor und Wasserstoff umfassen und in deren Zusammensetzung das Atomverhältnis Substituent:Silicium mindestens 1:1 beträgt, wobei
**a)** diese eine kinetisch hohe Stabilität gegenüber oxidativer Spaltung durch Chlor aufweisen, wobei bis zu Temperaturen von 120°C innerhalb von 10h unter Chlorgasüberschuss bei 1013hPa keine Umsetzung der Polysilane zu mehr als 30 Mol% erfolgt,
**b)** diese durch einen Teilabbau von halogenierten Polysilanen erhältlich sind, die entweder
1. thermisch hergestellte chlorierte Polysilane, oder
2. plasmachemisch hergestellte chlorierte Polysilane umfassen,
und der Teilabbau eine Chlorierung beinhaltet und über einen Zeitraum von 4h bis 29h bei einem Druck von 200 bis 2000 hPa durchgeführt wird.

22. Polysilan-Gemisch nach dem vorhergehenden Anspruch, wobei die thermisch hergestellten Polysilane jeweils mindestens eine direkte Bindung Si-Si aufweisen, und deren Substituenten aus Halogen, insbesondere Chlor bestehen und in deren Zusammensetzung das Atomverhältnis Substituent: Silicium mindestens 1:1 beträgt, wobei die Polysilane aus Ringen und Ketten mit einem hohen Anteil Verzweigungsstellen bestehen, der bezogen auf das gesamte Produktgemisch > 1 Mol% beträgt, ein RAMAN-Molekül¬schwingungsspektrum von I₁₀₀/I₁₃₂ < 1 aufweisen, wobei I₁₀₀ die Raman-Intensität bei 100 cm⁻¹ und I₁₃₂ die Raman-Intensität bei 132 cm⁻¹ bedeuten, und in 29Si-NMR-Spektren die signifikanten Produktsignale im chemischen Verschiebungs¬bereich von +23 ppm bis -13 ppm, von -18 ppm bis -33 ppm und von - 73 ppm bis -93 ppm vorhanden sind,
oder
die plasmachemisch hergestellten Polysilane mindestens eine direkte Bindung Si-Si aufweisen und deren Substituenten aus Halogen oder aus Halogen und Wasserstoff bestehen und in deren Zusammensetzung das Atom¬verhältnis Substituent: Silicium mindestens 1:1 beträgt, wobei a) das Halogen Chlor ist, b) der Wasserstoff-Gehalt des Polysilans kleiner als 2 Atom-% ist, c) das Polysilan nahezu keine kurzkettigen verzweigten Ketten und Ringe enthält, wobei der Gehalt an Verzweigungsstellen des kurzkettigen Anteiles, insbesondere des aufsummierten Anteils der perhalogenierten Derivate von Neohexasilan, Neopentasilan, Isotetrasilan, Isopentasilan und Isohexasilan bezogen auf das gesamte Produktgemisch kleiner als 1 Mol% beträgt, d) es ein RAMAN-Molekuelschwingungsspektrum von I₁₀₀/I₁₃₂ > 1 aufweist, wobei I₁₀₀ die Raman-Intensität bei 100 cm⁻¹ und I₁₃₂ die Raman-Intensität bei 132 cm⁻¹ bedeuten, e) es in ²⁹Si-NMR-Spektren seine signifikanten Produktsignale im chemischen Verschiebungsbereich von +15 ppm bis -7 ppm aufweist.

23. Polysilan-Gemisch nach einem der vorhergehenden Ansprüche 21 oder 22, wobei der Teilabbau bei Temperaturen zwischen 60°C und 140°C durchgeführt wird.

24. Polysilan-Gemisch nach einem der vorhergehenden Ansprüche 21 bis 23, wobei es die Merkmale zumindest einer der Ansprüche 1 bis 19 aufweist.

25. Verfahren zur Herstellung eines kinetisch stabilen halogenierten Polysilan-Gemischs nach einem der vorhergehenden Ansprüche, wobei ein Teilabbau halogenierter Polysilane, die durch ein thermisches und/oder plasmachemisches Verfahren hergestellt wurden, durchgeführt wird, wobei dieser Teilabbau
**a)** eine Chlorierung beinhaltet.
**b)** die Temperatur während der Reaktion 60 bis 140°C, bevorzugt 90 bis 130°C beträgt,
**c)** bei einem Druck von 200 bis 2000 hPa, bevorzugt bei 800 1500 hPa stattfindet.

26. Verfahren zur Herstellung von halogenierten Polysilanen nach dem vorhergehenden Anspruch, wobei nach dem Teilabbau eine Destillation zur Abtrennung einer Fraktion der gebildeten kinetisch stabilen halogenierten Polysilane mit Kettenlängen n = 2 und 3 durchgeführt wird.

27. Verfahren zur Herstellung von kinetisch stabilen halogenierten Polysilanen nach einem der vorhergehenden Ansprüche 25 oder 26, wobei die halogenierten Polysilane vor dem Teilabbau verdünnt werden, wobei bevorzugt SiCl₄, Si₂Cl₆ und/oder Si₃Cl₈ als Verdünnungsmittel verwendet werden.

28. Verfahren zur Herstellung von kinetisch stabilen halogenierten Polysilanen nach einem der Ansprüche 25 bis 27, wobei als Polysilane, die durch ein thermisches Verfahren hergestellt wurden, Polysilane verwendet werden, die jeweils mindestens eine direkte Bindung Si-Si aufweisen, und deren Substituenten aus Halogen, insbesondere Chlor bestehen und in deren Zusammensetzung das Atomverhältnis Substituent: Silicium mindestens 1:1 beträgt, wobei die Polysilane aus Ringen und Ketten mit einem hohen Anteil Verzweigungsstellen bestehen, der bezogen auf das gesamte Produktgemisch > 1 Mol% beträgt, ein RAMAN-Molekülschwingungsspektrum von I₁₀₀/I₁₃₂ < 1 aufweisen, wobei I₁₀₀ die Raman-Intensität bei 100 cm⁻¹ und I₁₃₂ die Raman-Intensität bei 132 cm⁻¹ bedeuten, und in 29Si-NMR-Spektren die signifikanten Produktsignale im chemischen Verschiebungsbereich von +23 ppm bis -13 ppm, von -18 ppm bis -33 ppm und von - 73 ppm bis -93 ppm vorhanden sind.

29. Verfahren zur Herstellung von kinetisch stabilen halogenierten Polysilanen nach einem der Ansprüche 25 bis 28, wobei als Polysilane, die durch ein plasmachemisches Verfahren hergestellt wurden, Polysilane verwendet werden, die mindestens eine direkte Bindung Si-Si aufweisen und deren Substituenten aus Halogen oder aus Halogen und Wasserstoff bestehen und in deren Zusammensetzung das Atom¬verhältnis Substituent: Silicium mindestens 1:1 beträgt, wobei a) das Halogen Chlor ist, b) der Wasserstoff-Gehalt des Polysilans kleiner als 2 Atom-% ist, c) das Polysilan nahezu keine kurzkettigen verzweigten Ketten und Ringe enthält, wobei der Gehalt an Verzweigungsstellen des kurzkettigen Anteiles, insbesondere des aufsummierten Anteils der perhalogenierten Derivate von Neohexasilan, Neopentasilan, Isotetrasilan, Isopentasilan und Isohexasilan bezogen auf das gesamte Produktgemisch kleiner als 1 Mol% beträgt, d) es ein RAMAN-Molekuelschwingungsspektrum von I100/I132 > 1 aufweist, wobei I100 die Raman-Intensität bei 100 cm-1 und I132 die Raman-Intensität bei 132 cm-1 bedeuten, e) es in 29Si-NMR-Spektren seine signifikanten Produktsignale im chemischen Verschiebungsbereich von +15 ppm bis -7 ppm aufweist.

30. Verwendung eines Gemisches kinetisch stabiler halogenierter Polysilane gemäß einem der Ansprüche 1 bis 24 zur Erzeugung von Schichten halogenierter Polysilane unter oxidierender Atmosphäre.

## Claims

1. Kinetically stable halogenated polysilanes in the form of a mixture of compounds having more than three silicon atoms in the backbone with in each case at least four interconnected Si atoms whose substituents comprise chlorine or chlorine and hydrogen and in whose composition the atomic ratio of substituent to silicon is at least 1:1, where
**a)** these polysilanes have a kinetically high stability toward oxidative cleavage by chlorine, with there being no reaction of the polysilanes to an extent of more than 30 mol%, preferably to an extent of more than 20 mol%, at a temperature of 120°C over the course of 10 hours under excess chlorine gas at 1013 hPa, and
**b)** these polysilanes having a fraction of branching sites in the polysilane molecules of more than 8 mol%, more particularly more than 11 mol%.

2. Polysilane mixture according to Claim 1, having a fraction of neo-Si₅Cl₁₂ of at least 10 mol%, more particularly more than 18 mol%, more preferably more than 25 mol%.

3. Polysilane mixture according to either of the preceding claims, having an empirical formula SiClₓ with x = 2.2 to 2.5, more particularly equals 2.25 to 2.4.

4. Polysilane mixture according to any of the preceding claims, having an average chain length of n equals 4 to 10, preferably n equals 4 to 8.

5. Polysilane mixture according to any of the preceding claims, which in ²⁹Si NMR spectra exhibits sharp significant product signals in the chemical shift range from 15 ppm to -10 ppm, and in the chemical shift range from -28 to -35 ppm, more particularly at -31 to -33 ppm, and in the chemical shift range from -70 to -85 ppm, more particularly at -77 to -82 ppm.

6. Polysilane mixture according to the preceding claim, where the sharp significant product signals in ²⁹Si NMR spectra are present in a chemical shift range selected from 8.5 ppm to 3 ppm, 1 ppm to -1 ppm, -3 to -5 ppm, and -6 ppm to -8.3 ppm, or combinations thereof.

7. Polysilane mixture according to any of the preceding claims, which in ²⁹Si NMR spectra possesses in each case at least the following number of significant sharp product signals in the following chemical shift ranges: four signals from 7 to 3 ppm, one signal from 1 to -1 ppm, one signal from -29.5 to -33 ppm, two signals from -78 to -82 ppm.

8. Polysilane mixture according to any of the preceding claims, further comprising hydrogen substituents as well as chlorine substituents.

9. Polysilane mixture according to the preceding claim, the hydrogen content being less than 2 atom%, more particularly less than 1 atom%.

10. Polysilane mixture according to either of preceding Claims 8 and 9, which in ¹H NMR spectra has product signals in the chemical shift range between 6.5 and 3.55 ppm, more particularly between 5.9 and 3.8 ppm.

11. Polysilane mixture according to any of the preceding claims, which in Raman spectra possesses its significant product signals at below 650 wavenumbers, more particularly between 270 and 350 and between 520 and 640 wavenumbers.

12. Polysilane mixture according to any of the preceding claims, which in Raman spectra possesses at least three significant product signals at 270 to 340 wavenumbers and at least two significant product signals at 540 to 640 wavenumbers.

13. Polysilane mixture according to any of the preceding claims, which is colorless to pale yellow or ivory.

14. Polysilane mixture according to any of the preceding claims, which is obtained in low-viscosity and/or crystalline form and is preferably not of high viscosity, the viscosity of the liquid fraction at RT being less than 1000 mPa s, preferably less than 400 mPa s.

15. Polysilane mixture according to any of the preceding claims, which is predominantly soluble in inert solvents.

16. Polysilane mixture according to any of the preceding claims, where the soluble fraction is distillable and/or volatile without decomposition to an extent of more than 80% under reduced pressure, preferably 1 to 100 Pa.

17. Polysilane mixture according to any of the preceding claims, the substituents consisting of chlorine.

18. Polysilane mixture according to any of the preceding claims, further comprising a fraction of halogenated polysilanes having a chain length n = 2 to 3 (Si₂Cl₆ and Si₃Cl₈, readily separable from the higher-chain polysilanes by distillation).

19. Polysilane mixture according to the preceding claim, having a stoichiometric formula SiClₓ with x = 2.2 to 2.5, more particularly equals 2.25 to 2.4.

20. Polysilane mixture according to any of the preceding claims, containing a fraction of less than 10 mol% of direct bonds between two secondary Si atoms.

21. Kinetically stable halogenated polysilanes in the form of a mixture of compounds having more than three silicon atoms in the backbone with in each case at least four interconnected Si atoms whose substituents comprise chlorine or chlorine and hydrogen and in whose composition the atomic ratio of substituent to silicon is at least 1:1, where
**a)** these polysilanes have a kinetically high stability toward oxidative cleavage by chlorine, with there being no reaction of the polysilanes to an extent of more than 30 mol%, up to temperatures of 120°C over the course of 10 hours under excess chlorine gas at 1013 hPa, **b)** these polysilanes are obtainable by a partial degradation of halogenated polysilanes which comprise either
1. thermally prepared chlorinated polysilanes, or
2. plasma-chemically prepared chlorinated polysilanes,
and the partial degradation includes a chlorination and is carried out over a period of 4 hours to 29 hours under a pressure of 200 to 2000 hPa.

22. Polysilane mixture according to the preceding claim, where the thermally prepared polysilanes have in each case at least one direct Si-Si bond, and their substituents consist of halogen, more particularly chlorine, and in their composition the atomic ratio of substituent to silicon is at least 1:1, the polysilanes consisting of rings and chains having a high fraction of branching sites, this fraction, based on the overall product mixture, being > 1 mol%, and said polysilanes having a RAMAN molecular vibration spectrum of I₁₀₀/I₁₃₂ < 1, where I₁₀₀ is the Raman intensity at 100 cm⁻¹ and I₁₃₂ is the Raman intensity at 132 cm⁻¹, and in 29Si NMR spectra the significant product signals are present in the chemical shift range from +23 ppm to -13 ppm, from -18 ppm to -33 ppm, and from -73 ppm to -93 ppm,
or
the plasma-chemically prepared polysilanes have at least one direct Si-Si bond and their substituents consist of halogen or of halogen and hydrogen and in their composition the atomic ratio of substituent to silicon is at least 1:1, where a) the halogen is chlorine, b) the hydrogen content of the polysilane is less than 2 atom%, c) the polysilane contains virtually no short-chain branched chains and rings, with the amount of branching sites of the short-chain fraction, in particular of the summed fraction of the perhalogenated derivatives of neohexasilane, neopentasilane, isotetrasilane, isopentasilane, and isohexasilane, based on the overall product mixture, being less than 1 mol%, d) it has a RAMAN molecular vibration spectrum of I₁₀₀/I₁₃₂ > 1, where I₁₀₀ is the Raman intensity at 100 cm⁻¹ and I₁₃₂ is the Raman intensity at 132 cm⁻¹, e) in ²⁹Si NMR spectra it has its significant product signals in the chemical shift range from +15 ppm to -7 ppm.

23. Polysilane mixture according to either of preceding Claims 21 and 22, where the partial degradation is carried out at temperatures between 60°C and 140°C.

24. Polysilane mixture according to any of preceding Claims 21 to 23, having the features of at least one of Claims 1 to 19.

25. Process for preparing a kinetically stable halogenated polysilane mixture according to any of the preceding claims, where a partial degradation of halogenated polysilanes which have been prepared by a thermal and/or plasma-chemical process is carried out, where this partial degradation
**a)** includes a chlorination,
**b)** the temperature during the reaction is 60 to 140°C, preferably 90 to 130°C,
**c)** takes place at a pressure of 200 to 2000 hPa, preferably at 800 to 1500 hPa.

26. Process for preparing halogenated polysilanes according to the preceding claim, where after the partial degradation a distillation for removing a fraction of the kinetically stable halogenated polysilanes formed with chain lengths n = 2 and 3 is carried out.

27. Process for preparing kinetically stable halogenated polysilanes according to either of preceding Claims 25 and 26, where the halogenated polysilanes are diluted prior to the partial degradation, diluents used being preferably SiCl₄, Si₂Cl₆ and/or Si₃Cl₈.

28. Process for preparing kinetically stable halogenated polysilanes according to any of Claims 25 to 27, where as polysilanes which have been prepared by a thermal process, polysilanes are used which in each case have at least one direct Si-Si bond, and whose substituents consist of halogen, more particularly chlorine, and in whose composition the atomic ratio of substituent to silicon is at least 1:1, the polysilanes consisting of rings and chains having a high fraction of branching sites, this fraction, based on the overall product mixture, being > 1 mol%, said polysilanes having a RAMAN molecular vibration spectrum of I₁₀₀/I₁₃₂ < 1, where I₁₀₀ is the Raman intensity at 100 cm⁻¹ and I₁₃₂ is the Raman intensity at 132 cm⁻¹, and in 29Si NMR spectra the significant product signals are present in the chemical shift range from +23 ppm to -13 ppm, from -18 ppm to -33 ppm, and from -73 ppm to -93 ppm.

29. Process for preparing kinetically stable halogenated polysilanes according to any of Claims 25 to 28, the polysilanes used which have been prepared by a plasma-chemical process being polysilanes which have at least one direct Si-Si bond and whose substituents consist of halogen or of halogen and hydrogen and in whose composition the atomic ratio of substituent to silicon is at least 1:1, where a) the halogen is chlorine, b) the hydrogen content of the polysilane is less than 2 atom%, c) the polysilane contains virtually no short-chain branched chains and rings, the amount of branching sites of the short-chain fraction, in particular of the summed fraction of the perhalogenated derivatives of neohexasilane, neopentasilane, isotetrasilane, isopentasilane, and isohexasilane, based on the overall product mixture, being less than 1 mol%, d) it has a RAMAN molecular vibration spectrum of I100/I132 > 1, where I100 is the Raman intensity at 100 cm-1 and I132 is the Raman intensity at 132 cm-1, e) in 29Si NMR spectra it has its significant product signals in the chemical shift range from +15 ppm to -7 ppm.

30. Use of a mixture of kinetically stable halogenated polysilanes according to any of Claims 1 to 24 for generating layers of halogenated polysilanes under an oxidizing atmosphere.

## Revendications

1. Polysilanes halogénés cinétiquement stables sous forme de mélange de composés présentant plus de trois atomes de silicium dans la structure de base, présentant à chaque fois au moins quatre atomes de Si liés les uns aux autres dont les substituants comprennent le chlore ou le chlore et l'hydrogène et le rapport atomique substituant:silicium dans la composition vaut au moins 1:1, où
a) ceux-ci présentent une stabilité cinétiquement élevée par rapport à la dissociation par oxydation par le chlore, la transformation des polysilanes à une température de 120°C, en 10 h sous un excès de chlore gazeux à 1013 hPa, ne s'effectuant pas à raison de plus de 30% en mole, de préférence à raison de plus de 20% en mole, et
b) ceux-ci présentent une proportion de sites de ramification dans les molécules de polysilane supérieure à 8% en mole, en particulier supérieure à 11% en mole.

2. Mélange de polysilanes selon la revendication 1, celui-ci présentant une proportion de néo-Si₅Cl₁₂ d'au moins 10% en mole, en particulier de plus de 18% en mole, de manière particulièrement préférée de plus de 25% en mole.

3. Mélange de polysilanes selon l'une quelconque des revendications précédentes, présentant une formule empirique SiClₓ avec x = 2,2 à 2,5, en particulier 2,25 à 2,4.

4. Mélange de polysilanes selon l'une quelconque des revendications précédentes, présentant une longueur moyenne de chaîne n = 4 à 10, de n = 4 à 8.

5. Mélange de polysilanes selon l'une quelconque des revendications précédentes, présentant, dans les spectres ²⁹Si-RMN, des signaux de produits significatifs nets dans la plage de déplacement chimique de 15 ppm à -10 ppm, et dans la plage de déplacement chimique de -28 à -35 ppm, en particulier à -31 jusqu'à -33 ppm, et dans la plage de déplacement chimique de -70 à -85 ppm en particulier à -77 jusqu'à -82 ppm.

6. Mélange de polysilanes selon l'une quelconque des revendications précédentes, les signaux de produits significatifs nets dans les spectres ²⁹Si-RMN étant présents dans une plage de déplacement chimique choisie parmi 8,5 à 3 ppm, 1 ppm à -1 ppm, -3 à -5 ppm et -6 ppm à -8,3 ppm ou leurs combinaisons.

7. Mélange de polysilanes selon l'une quelconque des revendications précédentes, présentant, dans les spectres de ²⁹Si-RMN, dans les plages de déplacement chimique suivantes, à chaque fois au moins le nombre suivant de signaux de produits significatifs nets : quatre signaux de 7 à 3 ppm, un signal de 1 à -1 ppm, un signal de -29,5 à -33 ppm, deux signaux de -78 à -82 ppm.

8. Mélange de polysilanes selon l'une quelconque des revendications précédentes, contenant, outre les substituants de chlore, en plus des substituants d'hydrogène.

9. Mélange de polysilanes selon la revendication précédente, la teneur en hydrogène étant inférieure à 2% en atome, en particulier inférieure à 1% en atome.

10. Mélange de polysilanes selon l'une quelconque des revendications 8 ou 9, présentant, dans les spectres ¹H-RMN, des signaux de produits dans la plage de déplacement chimique entre 6,5 et 3,55 ppm, en particulier entre 5,9 et 3,8 ppm.

11. Mélange de polysilanes selon l'une quelconque des revendications précédentes, présentant, dans les spectres Raman, ses signaux de produits significatifs à moins de 650 nombres d'onde, en particulier entre 270 et 350 et entre 520 et 640 nombres d'onde.

12. Mélange de polysilanes selon l'une quelconque des revendications précédentes, présentant, dans les spectres Raman, au moins trois signaux de produits significatifs à 270 jusqu'à 340 nombres d'onde et au moins deux signaux de produits significatifs à 540 jusqu'à 640 nombres d'onde.

13. Mélange de polysilanes selon l'une quelconque des revendications, le mélange étant incolore à faiblement jaune ou ivoire.

14. Mélange de polysilanes selon l'une quelconque des revendications précédentes, le mélange étant liquide et/ou cristallin et de préférence non visqueux, la viscosité de la proportion liquide à température ambiante étant inférieure à 1000 mPa.s, de préférence inférieure à 400 mPa.s.

15. Mélange de polysilanes selon l'une quelconque des revendications, le mélange étant majoritairement soluble dans des solvants inertes.

16. Mélange de polysilanes selon l'une quelconque des revendications précédentes, la fraction soluble étant volatile et/ou distillable sans décomposition à raison de plus de 80% sous pression réduite, de préférence de 1 à 100 Pa.

17. Mélange de polysilanes selon l'une quelconque des revendications précédentes, les substituants étant constitués de chlore.

18. Mélange de polysilanes selon l'une quelconque des revendications précédentes, présentant en outre une fraction de polysilanes halogénés présentant une longueur de chaîne n = 2 à 3 (Si₂Cl₆ et Si₃Cl₈, facilement séparables par distillation des polysilanes à chaîne plus élevée).

19. Mélange de polysilanes selon la revendication précédente, présentant une formule stoechiométrique SiClₓ avec x = 2,2 à 2,5, en particulier 2,25 à 2,4.

20. Mélange de polysilanes selon l'une quelconque des revendications précédentes, le mélange contenant une proportion inférieure à 10% en mole de liaisons directes entre deux atomes de Si secondaires.

21. Polysilanes halogénés cinétiquement stables sous forme de mélange de composés présentant plus de trois atomes de silicium dans la structure de base, présentant à chaque fois au moins quatre atomes de Si liés les uns aux autres dont les substituants comprennent le chlore ou le chlore et l'hydrogène et le rapport atomique substituant:silicium dans la composition vaut au moins 1:1, où
a) ceux-ci présentent une stabilité cinétiquement élevée par rapport à la dissociation par oxydation par le chlore, la transformation des polysilanes jusqu'à des températures de 120°C, en 10 h sous un excès de chlore gazeux à 1013 hPa, ne s'effectuant pas à raison de plus de 30% en mole,
b) ceux-ci peuvent être obtenus par une dégradation partielle de polysilanes halogénés qui comprennent soit
1. des polysilanes chlorés préparés thermiquement, ou
2. des polysilanes chlorés préparés par chimie au plasma,
et la dégradation partielle comportant une chloration et étant réalisée en un laps de temps de 4 h à 29 h à une pression de 200 à 2000 hPa.

22. Mélange de polysilanes selon la revendication précédente, les polysilanes préparés thermiquement présentant à chaque fois au moins une liaison directe Si-Si, et leurs substituants étant constitués d'halogène, en particulier de chlore et, dans leur composition, le rapport atomique substituant:silicium valant au moins 1:1, les polysilanes étant constitués de cycles et de chaînes présentant une proportion élevée de sites de ramification, qui, par rapport au mélange total de produits, est > 1 % en mole, présentant un spectre d'oscillation moléculaire RAMAN I₁₀₀/I₁₃₂ < 1, I₁₀₀ signifiant l'intensité de Raman à 100 cm⁻¹ et I₁₃₂ l'intensité de Raman à 132 cm⁻¹, et présentant, dans les spectres ²⁹Si-RMN, les signaux de produits significatifs dans la plage de déplacement chimique de +23 ppm à -13 ppm, de -18 ppm à -33 ppm et de -73 ppm à -93 ppm,
ou
les polysilanes préparés par chimie au plasma présentant au moins une liaison Si-Si directe et leurs substituants étant constitués d'halogène ou d'halogène et d'hydrogène et, dans leur composition, le rapport atomique substituant:silicium valant au moins 1:1, où a) l'halogène est le chlore, b) la teneur en hydrogène du polysilane est inférieure à 2% en atome, c) le polysilane ne contient quasiment pas de chaînes ramifiées courtes, ni de cycles, la teneur en sites de ramification de la proportion à courte chaîne, en particulier de la proportion totalisée des dérivés perhalogénés de néohexasilane, néopentasilane, isotétrasilane, isopentasilane et isohexasilane, par rapport au mélange total de produits, étant inférieure à 1% en mole, d) il présente un spectre d'oscillations moléculaires RAMAN I₁₀₀/I₁₃₂ > 1, I₁₀₀ signifiant l'intensité de Raman à 100 cm⁻¹ et I₁₃₂ l'intensité de Raman à 132 cm⁻¹, e) il présente, dans les spectres ²⁹Si-RMN, ses signaux de produits significatifs dans la plage de déplacement chimique de +15 ppm à -7 ppm.

23. Mélange de polysilanes selon l'une quelconque des revendications précédentes 21 ou 22, la dégradation partielle étant réalisée à des températures entre 60°C et 140°C.

24. Mélange de polysilanes selon l'une quelconque des revendications précédentes 21 à 23, présentant les caractéristiques d'au moins une des revendications 1 à 19.

25. Procédé pour la préparation d'un mélange de polysilanes halogénés cinétiquement stables selon l'une quelconque des revendications précédentes, une dégradation partielle de polysilanes halogénés, qui ont été préparés par un procédé thermique et/ou chimique au plasma, étant réalisée, cette dégradation partielle
a) comportant une chloration.
b) la température pendant la réaction valant 60 à 140°C, de préférence 90 à 130°C,
c) ayant lieu à une pression de 200 à 2000 hPa, de préférence à 800 jusqu'à 1500 hPa.

26. Procédé pour la préparation de polysilanes halogénés selon la revendication précédente, une distillation pour la séparation d'une fraction des polysilanes halogénés cinétiquement stables formés présentant des longueurs de chaîne n = 2 et 3 étant réalisée après la dégradation partielle.

27. Procédé pour la préparation de polysilanes halogénés cinétiquement stables selon l'une quelconque des revendications précédentes 25 ou 26, les polysilanes halogénés étant dilués avant la dégradation partielle, en utilisant de préférence SiCl₄, Si₂Cl₆ et/ou Si₃Cl₈ comme diluant.

28. Procédé pour la préparation de polysilanes halogénés cinétiquement stables selon l'une quelconque des revendications 25 à 27, en utilisant, comme polysilanes qui ont été préparés par un procédé thermique, des polysilanes présentant à chaque fois au moins une liaison directe Si-Si, et leurs substituants étant constitués d'halogène, en particulier de chlore et, dans leur composition, le rapport atomique substituant:silicium valant au moins 1:1, les polysilanes étant constitués de cycles et de chaînes présentant une proportion élevée de sites de ramification, qui, par rapport au mélange total de produits, est > 1 % en mole, présentant un spectre d'oscillation moléculaire RAMAN I₁₀₀/I₁₃₂ < 1, I₁₀₀ signifiant l'intensité de Raman à 100 cm⁻¹ et I₁₃₂ l'intensité de Raman à 132 cm⁻¹, et présentant, dans les spectres ²⁹Si-RMN, les signaux de produits significatifs dans la plage de déplacement chimique de +23 ppm à -13 ppm, de -18 ppm à -33 ppm et de -73 ppm à -93 ppm,

29. Procédé pour la préparation de polysilanes halogénés cinétiquement stables selon l'une quelconque des revendications 25 à 28, en utilisant, comme polysilanes, qui ont été préparés par un procédé chimique au plasma, des polysilanes, qui présentent au moins une liaison directe Si-Si et dont les substituants sont constitués d'halogène ou d'halogène et d'hydrogène et le rapport atomique substituant:silicium dans leur composition valant au moins 1:1, où
a) l'halogène est le chlore,
b) la teneur en hydrogène du polysilane est inférieure à 2% en atome,
c) le polysilane ne contient quasiment pas de chaînes ramifiées à courte chaîne, ni de cycles, la teneur en sites de ramification de la proportion à courte chaîne, en particulier de la proportion totalisée de dérivés perhalogénés de néohexasilane, néopentasilane, isotétrasilane, isopentasilane et isohexasilane, par rapport au mélange total de produits étant inférieure à 1%,
d) il présente un spectre d'oscillations moléculaires RAMAN de I₁₀₀/I₁₃₂ > 1, I₁₀₀ signifiant l'intensité de Raman à 100 cm⁻¹ et I₁₃₂ l'intensité de Raman à 132 cm⁻¹,
e) il présente, dans les spectres ²⁹Si-RMN, les signaux de produits significatifs dans la zone de déplacement chimique de +15 ppm à -7 ppm.

30. Utilisation d'un mélange de polysilanes halogénés cinétiquement stables selon l'une quelconque des revendications 1 à 24 pour la production de couches de polysilanes halogénés sous atmosphère oxydante.
